## Europäisches Patentamt
## European Patent Office
## Office européen des brevets

(11) Publication number: **0 124 468**
A1

# EUROPEAN PATENT APPLICATION

(21) Application number: **84630054.9**

(22) Date of filing: **03.04.84**

(51) Int. Cl.³: **E 21 B 17/046, F 16 L 37/12**

(30) Priority: **18.04.83 US 485590**

(43) Date of publication of application: **07.11.84**
**Bulletin 84/45**

(84) Designated Contracting States: **DE FR GB IT NL**

(71) Applicant: **VARCO INTERNATIONAL, INC., 800 North Eckhoff Street, Orange, CA 92668 (US)**

(72) Inventor: **Purugganan, Bert A., 9714 Oxteo Lane, Spring Texas 77373 (US)**
Inventor: **Vos, Timothy J., 2767 Longleaf Pine, Kingwood Texas 77339 (US)**

(74) Representative: **Weydert, Robert et al, Office Dennemeyer S.à.r.l. 21-25 Allée Scheffer P.O. Box 41, L-2010 Luxembourg (LU)**

(54) **Pin and box connector assembly.**

(57) A joint for securing tubular pin and box sections together, including a locking member (35) carried by the box section and tightenable laterally against the pin section by an actuating element (48) which is connected threadedly to the box section and is rotatable by a rotary driving part (63) adapted to be turned by a tool (74), with the joint including holding means for releasably retaining the driving part (63) against rotation. The driving part (63) is preferably mounted for movement relative to the actuating element (48) between a locking position in which the driving part (63) is retained against rotation and a released position in which the driving part (63) can be turned to adjust the actuating element (48). The actuating element (48) desirably contains a non-circular recess within which a correspondingly non-circular portion of the driving part (63) is received to transmit rotation between the parts. A fastener (51) for securing the actuating element (48) rotatably to the locking member (35) can be detached from the locking member (35) by a tool extending through an opening in the driving part (63) and through a spring (68) which yieldingly urges the driving part (63) to its locking position.

— 1 —

"PIN AND BOX CONNECTOR ASSEMBLY"

Background of the Invention

This invention relates to improved joints for interconnecting tubular pin and box sections in a string of piling or other interconnected pipe sections.

A joint embodying the invention is of a known general type in which the box section movably carries a locking element adapted to be tightened laterally inwardly against the side of the pin section in a relation locking the parts against axial separation. The locking member is actuable laterally inwardly by an actuating element which is threadedly connected to the box section, either directly or indirectly through an internally and externally threaded insert, with means being provided for turning the actuating element by a tool from the outside of the box section and for releasably retaining the actuating element against rotation from a predetermined set position. In a device of this type shown in copending application Serial Number 6/447,459 entitled "Self-Aligning Rigid Pile Connections" filed by Arthur A. Ahlstone on December 6, 1982, the actuating element is adapted to be rotated by a part disposed about an externally non-circular portion of the actuating element and releasably retainable in a set position by a series of circularly spaced spring pressed detent pins.

Summary of the Invention

A major object of the present invention is to provide an improved mechanism for turning and locking the actuating element in a joint of the above discussed type. An arrangement embodying the invention is very positive in its action both in turning the actuating element and in locking it against rotation in any desired set position, and achieves these results in a very simple overall type of

00124468

-2-

mechanism. In addition, the entire mechanism with the exception of the pin engaging locking member per se can be removed laterally to the outside of the box section while the pin and box remain in their interconnected relation.

The mechanism desirably includes a rotary driving part which turns the actuating element in adjusting relation and which also is movable along the axis of rotation of these parts relative to the actuating element between a locking position and a released position. In the locking position, the driving part is retained against rotation by coacting holding means, while in the released position the driving part is free for rotation to turn the actuating element and thus tighten the locking member against the pin. The holding means may take the form of a flange carried by an internally and externally threaded insert of the type discussed above and against which the driving part is engageable in a relation locking the latter against rotation. A spring or other yielding means may be provided for urging the driving part to its locking position and permitting its displacement by a tool against the tendency of the spring to released condition.

The rotary driving part preferably has an externally non-circular portion projecting into a non-circular recess in the actuating element, to transmit rotation thereto while desirably permitting relative shifting movement of the driving part within the actuating element. The driving part may contain an opening through which a tool can extend for access to a fastener which secures the actuating element rotatably to the pin engaging locking member, to allow the fastener to be detached by such a tool. This tool may also extend through a coil spring which functions to urge the driving part laterally outwardly away from and relative to the fastener and the actuating element.

Brief Description of the Drawings

The above and other features and objects of the invention will be better understood from the following detailed description of the typical embodiment illustrated in

-3-

the accompanying drawings in which:

Fig. 1 is an axial section through a pile connector formed in accordance with the invention;

Fig. 2 is an enlarged axial section through one of the locking assemblies of the Fig. 1 pile connection, with the view taken at the location of the circle identified by the number 2 in Fig. 1;

Fig. 3 is a partially elevational and partially sectional view taken on line 3-3 of Fig. 2;

Fig. 4 is an enlarged fragmentary horizontal section taken on line 4-4 of Fig. 1, but showing the actuating assembly removed laterally from the box element; and

Fig. 5 is a fragmentary vertical section taken on line 5-5 of Fig. 2.

## Description of the Preferred Embodiment

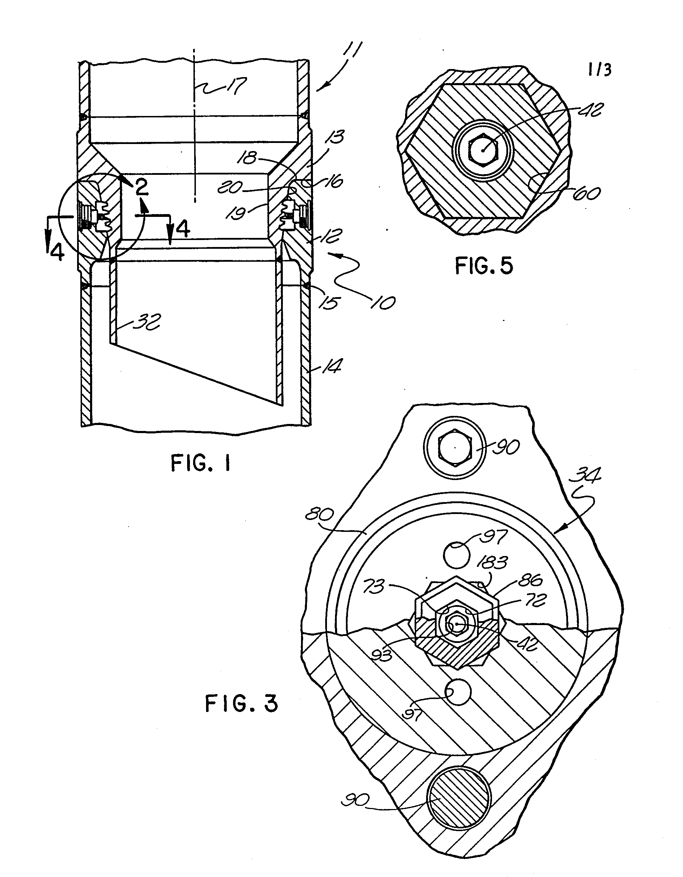

Fig. 1 represents fragmentarily one of the joints or connector assemblies 10 in a pipe string 11 which may typically be intended to function as a string of piling to be driven downwardly into the earth formation beneath a body of water to support a marine drilling platform. Each joint 10 in the string of piling includes a box 12 at the upper end of one of the interconnected pile sections and a pin 13 at the lower end of the next successive pile section. The box and pin of each section of piling may be formed separately from the main body 14 of that section and be welded annularly to opposite ends thereof as represented at 15.

The pin 13 of each joint 10 is annular about the axis 17 of the joint and string, and preferably has a downwardly facing annular shoulder 16 disposed transversely of axis 17 and engageable with an upwardly facing similarly transverse annular stop shoulder 18 formed on the engaged box section 12 to limit the extent to which the pin and box can be connected axially together, and to transmit downward forces from the pin to the box when the piling is driven into the earth. Downwardly beyond shoulder 16, pin 13 has a reduced diameter tubular portion 19 with an outer surface 20 which is centered about axis 17 and tapers frustoconically to a reduced diameter as it advances downwardly.

-4-

At the juncture of shoulder 16 and conically tapering surface 20, the pin may have an annular curving fillet surface 21 as seen in Fig. 2.

The conical surface 20 is interrupted by a series of (typically 4) similar annular grooves 22, 23, 24 and 25 formed in the outer surface of the pin and preferably having the axial sectional configuration illustrated in Fig. 2. More particularly, each groove may have an upper wall 26 inclined to advance relatively rapidly downwardly as it advances radially inwardly, and a lower wall 27 which advances upwardly as it advances radially inwardly but at a less abrupt angle than upper wall 26. At their radially inner extremities, grooves 22, 23, 24 and 25 may have inner annular surfaces 28.

All of the grooves 22, 23, 24 and 25 may extend radially inwardly into the material of the pin a common distance d beyond the conically tapering surface 20 of the pin, so that the inner extremity 28 of the bottom groove 25 is closer to axis 17 of the pin section than is the inner wall 28 of the next higher groove 24. Similarly, groove 24 is closer to the axis than is the next upper groove 23, and groove 23 is closer to the axis than the top groove 22. All of the inner walls 28 of the various grooves are preferably aligned to form in effect portions of a common cone represented at 29 in Fig. 2. The peak surfaces 30 of teeth 31 formed between the grooves are aligned conically and may be considered as constituting portions of the previously discussed tapering external surface 20 of the pin. A stabbing tube 32 may be welded to the lower end of the pin and project downwardly therebeyond for facilitating initial insertion of the pin into box 12.

Box section 12 is also annular about axis 17 of the joint except as that annular configuration is interrupted by provision of recesses or pockets 33 formed in the side wall of the box for reception of actuating assemblies 34 which tighten a series of locking members or dogs 35 against the pin. Internally, box 12 has an inner surface 36 which tapers frustoconically in correspondence with external surface 20 of the pin, and which is received in close proxi-

-5-

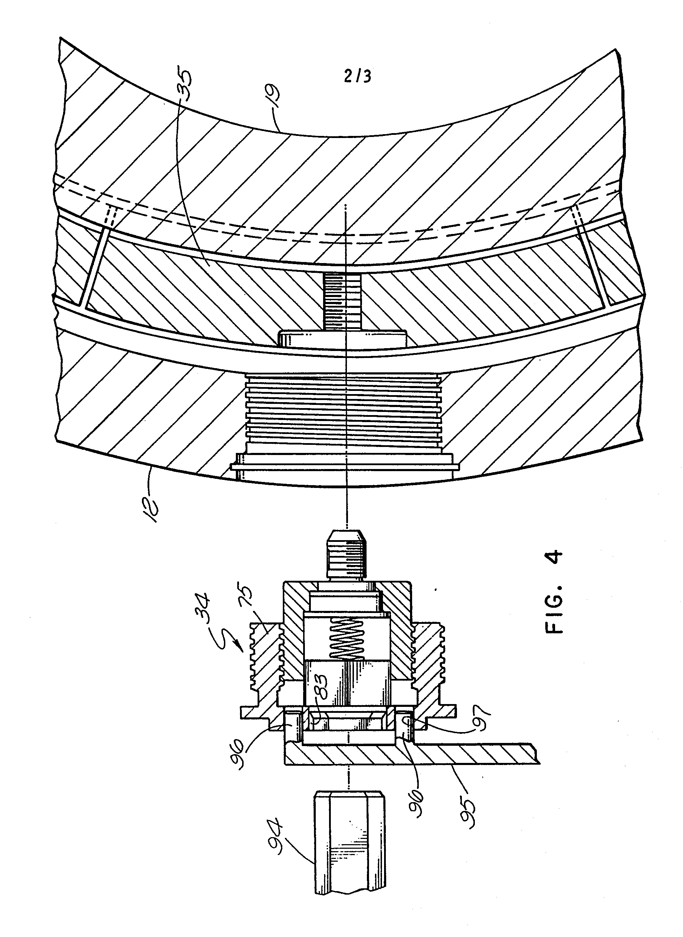

mity to or in engagement with surface 20 in the Fig. 2 fully assembled condition of the joint. At a location radially opposite grooves 22 through 25 of the pin, box 12 contains an annular groove 37 having top and bottom walls 38 and 39 disposed transversely of axis 17 and engaging transverse top and bottom surfaces 40 and 41 of locking members 35 in a relation confining the locking members against upward and downward movement relative to the box and guiding those members for radial sliding movement relative to the box along axes 42 extending perpendicular to and intersecting main axis 17. As seen in Fig. 4, the locking members 35 extend arcuately about axis 17 and form a series of segments comprising together a substantially annular locking structure constrictable inwardly against the pin. Each of the locking elements has a series of teeth 43, 44, 45 and 46 movable into and out of grooves 22 through 25 respectively in the pin, with each of the three lower teeth projecting inwardly farther than the next higher tooth in correspondence with the taper of surfaces 20 and 36 and the previously discussed orientation of the mating grooves 22 through 25, so that a lower surface 47 of each tooth disposed at an angularity corresponding to bottom wall 27 of the associated groove 22, 23, 24 or 25 engages that groove surface in a relation camming the pin downwardly relative to the box in response to radially inward movement of the locking member. In the fully tightened condition of the joint, surfaces 26, 28 and 30 of the pin are all spaced a short distance from the radially opposed essentially parallel inner surfaces 126, 128 and 130 of locking members 35, as seen in Fig. 2, to assure effective camming of the pin and box together by the locking members.

An actuating assembly 34 is provided for each of the locking members 35. This assembly includes an actuating element 48, which is circular about axis 42 and projects into a shallow circular recess 49 in the back of the corresponding locking member. Element 48 applies force radially inwardly against locking member 35 through engaging surfaces disposed transversely of axis 42 at 50. A retaining screw or fastener 51 secures actuating element 48 to locking

-6-

member 35 in the position of Fig. 2, while permitting rotation of element 48 relative to the locking member. For this purpose, screw 51 has an externally threaded shank 52 connected into a threaded bore 53 in the locking member, preferably with a self-locking part 54 formed of nylon or the like received within a groove 55 in the outside of the screw to engage the threads of the locking member in a manner frictionally retaining the screw against removal from bore 53. The enlarged head 151 of screw 51 acts against an annular flange 56 formed in the end of actuating element 48 in a manner confining that flange between the screw head and locking member 35 and thereby preventing movement of element 48 relative to the locking member along axis 42. An annular low friction bushing 57 may be interposed between the screw and element 48 as shown, to assure the desired freedom for rotation of element 48. Engagement of shoulders on the screw and member 35 at 58 limits the extent to which the screw can be connected into the locking member, and thus predetermines the final assembled condition of the screw relative to member 35 at a position allowing sufficient looseness of the actuating element to permit its rotation.

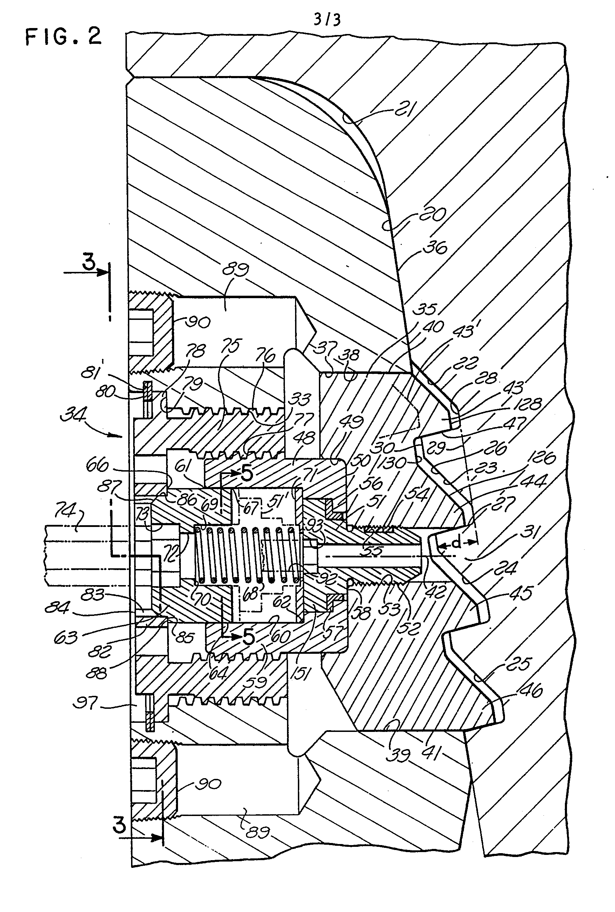

Projecting leftwardly in Fig. 2 beyond screw 51, actuating element 48 has a tubular sidewall portion 59 centered about axis 42 and having an internal surface 60 which is of non-circular preferably hexagonal cross-section transversely of axis 42, as seen in Fig. 5. This non-circular cross-section may continue from the left end 61 of actuating element 48 (as viewed in Fig. 2) to the location 62. A rotary driving part 63 projects into, and is movable along axis 42 relative to, actuating element 48, and has an external surface 64 of non-circular preferably hexagonal cross-section corresponding to internal surface 60 in element 48. This cross-section may be uniform between the locations 66 and 67 of Fig. 2, to allow effective transmission of rotary motion from driving part 63 to actuating element 48, while at the same time permitting relative movement of these parts along axis 42. A coil spring 68 yieldingly urges part 63 leftwardly relative to the actuating element, with the left end of the coil
spring being centered within a recess 69 in part 63
and bearing leftwardly against an annular shoulder 70 in part
63, and with the right end of the spring applying force to
screw 51. An annular washer 71 is confined within element
48, and is disposed about the right end of the spring to
center it about axis 42, with this washer desirably being
externally hexagonal in correspondence with the internal
configuration of the engaged surface 60 in element 48.
Leftwardly beyond shoulder 70, driving part 63 contains
a reduced diameter passage 72 forming a continuation of
recess 69, and leading to a tool engaging socket recess
73 centered about axis 42 and of hexagonal cross-sectional
configuration transversely of that axis. An externally
hexagonal allen wrench 74 can be inserted into socket
73 to turn part 63 about axis 42.

Actuating element 48 is removably mounted within recess
or opening 33 in the side wall of the box 12 by an
essentially annular insert 75 having external threads
centered about axis 42 and engaging internal threads of
the box section at 76, and having internal threads centered
about axis 42 and engaging external threads on the actuating
element at 77. Insert 75 is screwed into passage 33 in the
box to the Fig. 2 position in which an annular flange 78
on the insert abuts against a transverse shoulder 79
on the box, with the insert then being retained in that
position by a snap ring 80 received within an annular
groove 81 in the box section and projecting to the Fig. 2
position of engagement with the outer side of flange 78.
As will be understood, ring 80 can be constricted to a
reduced diameter condition for insertion into groove 81 or
removal therefrom, and will resiliently return to the
Fig. 2 diameter within groove 81 when permitted to do so.

At its outer end, insert 75 has an internal flange 82
projecting inwardly toward axis 42 and having an inner
surface 83 which is of twelve point configuration transversely
of axis 42 between the locations 84 and 85 of Fig. 2.
Driving part 63 has a short externally non-circular portion
86 near its left end which is projectable into the inter-

-8-

nally twelve point portion 83 of insert 75 in a relation enabling part 75 to retain driving part 63 against relative rotation. As seen in Fig. 3, the outer non-circular surface 86 of the driving part may be hexagonal with the points of the hexagon fitting into alternate ones of the 12 points of internal surface 83 in flange 82, so that the driving part may engage the twelve point recess and be retained thereby against rotation relative to part 75 in any of twelve different rotary settings of the parts. Bevelled surfaces 87 on part 63 facilitate its effective movement into these various interlocked positions relative to flange 82 of insert 75, with spring 68 acting to urge the driving part against flange 82 and to a position in which transverse shoulders on the parts engage at 88 to limit leftward movement of the driving part in the Fig. 2 position. When an allen wrench 74 is inserted into socket 73 of driving part 63 and force is exerted rightwardly by the allen wrench, such force can displace driving part 63 rightwardly far enough to move its hexagonal portion 86 out of the twelve point recess 83 in insert 75 and thus allow driving part 63 to be rotated about axis 42 with corresponding rotation of actuating element 48.

Passages 89 may be provided in the side wall of box 12 above and beneath each of the actuating assemblies 34 in order to allow access to a location at the inner end of the actuating assembly, with these passages being closed by removable threaded plugs 90.

In making a connection with the joint 10 illustrated in the drawings, a user may first retract each of the locking members 35 of the box section 12 radially outwardly far enough to move the innermost surfaces 128 of teeth 43, 44, 45 and 46 at least to positions of alignment with inner tapering surface 36 of the box (see broken line position 43' of the upper tooth in Fig. 2), and preferably slightly outwardly beyond that position, so that locking members 35 and their teeth do not interfere with insertion of the pin downwardly into the box. After the pin has been stabbed into the box to the Fig. 1 position, an allen wrench 74 is inserted into each of the driving parts 63 in turn, as represented in Fig. 2, and is pressed inwardly (rightwardly in Fig. 2) far enough to move hexagonal portion 86 of the driving part out of twelve point recess 83, after which the allen wrench is turned with the driving part in this inwardly displaced position to rotate actuating element 48 relative to insert 75, with resultant rightward movement of the actuating element and connected locking member 35 as a result of the threaded connection 77 between the actuating element and insert. This rightward advancement of the locking member is continued until surfaces 47 of the teeth bear sufficiently tightly against bottom walls 27 of grooves 22 through 25 to cam the pin tightly downwardly relative to the box and bring shoulders 16 and 18 into a desired tightly engaging preferably prestressed condition. When each of the locking members 35 reaches the desired setting, the operator releases the rightward force on allen wrench 74 to permit leftward movement of the driving part 63 to the Fig. 2 position in which its hexagonal portion 86 again engages twelve point recess 83 in a manner locking the driving part and actuating element against rotation from the preset condition. Spring 68 of course returns the driving part to its locking condition and retains it in that condition.

If it is desired to remove one of the actuating assemblies 38 for repair or replacement, snap ring 80 can be removed from groove 81 by constriction to a reduced diameter condition, and an externally hexagonal allen wrench 92 (Fig. 2) smaller than the previously discussed wrench 74 can be inserted axially (rightwardly in Fig. 2) from the outside of the box section through the passage formed within driving part 63 and through coil spring 68 into a position of reception within a hexagonal allen wrench socket 93 formed in the head of screw 51, to enable the screw to be turned by the wrench 92. The screw is turned in this manner far enough to unthread shank 52 from locking member 35 (for example, to the broken line position 51' of Fig. 2), thus detaching the screw and other parts from locking member 35 and enabling the entire assembly to be withdrawn to the outside of the box member as represented in

-10-

Fig. 4. During such withdrawal, insert 75 is rotated in a counterclockwise direction to unscrew the insert from the box at the threaded connection 76. Such rotation may be effected by an externally hexagonal allen wrench 94 which can be inserted into the twelve point recess 83 of insert 75 in driving relation. Alternatively, insert 75 can be turned by a spanner wrench 95 having two lugs 96 projecting into a pair of openings 97 formed in insert 75 at diametrically opposite locations.

Removal of one of the actuating assemblies 34 from the box does not destroy the tight connection formed between the box and pin by the remaining locking members. After such removal, each actuating assembly can be disassembled for repair or replacement, and then reconnected back into the corresponding recess 33 in the box section, with the assembly first being screwed into threaded engagement with the box at 76 until flange 78 abuts against stop shoulder 79, after which ring 80 is constricted and moved to a position radially inwardly opposite groove 81 and then allowed to expand by its own resilience into that groove to lock insert 75 and the carried parts in the Fig. 2 condition. Allen wrench 92 can then be inserted through part 63 and spring 68 into engagement with fastener 51, and then rotated to screw that fastener to its Fig. 2 position in which it retains actuating element 48 rotatably to the locking member 35.

While a certain specific embodiment of the present invention has been disclosed as typical, the invention is of course not limited to this particular form, but rather is applicable broadly to all such variations as fall within the scope of the appended claims.

00124468

-11-

Claims

1. A joint comprising a box section, a pin section, a locking member mounted to the box section for actuation toward and away from the pin section, an actuating element connected threadedly to the box section and operable by rotation about an axis to actuate the locking member inwardly against the pin section to a position retaining the sections together, a rotary driving part adapted to be turned about said axis by a tool and engageable with the actuating element to rotate it, and holding means retaining said driving part against rotation, characterized by said driving part being movable relative to said actuating element between a locking position in which the driving part is retained by said holding means against rotation, and a released position in which the driving part is free for rotation to turn said actuating element.

2. A joint as claimed in claim 1, in which said driving part has an externally non-circular portion engaging an internally non-circular portion of said actuating element to transmit rotary motion thereto in different relative axial positions.

3. A joint as claimed in claim 1 or claim 2, in which said holding means include a flange outwardly of said driving part engageable by the driving part to retain it against rotation, said driving part being movable inwardly toward said box section relative to said actuating element and said flange and to said released position.

4. A joint as claimed in claim 3, including a tubular insert carrying said flange and having external threads connected to said box section and internal threads engaging threads on said actuating element.

5. A joint as claimed in any of the preceding claims,

00124468

-12-

including means yieldingly resisting movement of said driving part relative to said actuating element between said locking and released positions.

6. A joint as claimed in any of claims 1 to 4, including a fastener for connecting said actuating element rotatably to said locking member, and a spring yieldingly urging said driving part to said locking position thereof, said holding means and said actuating element and driving part and spring being open to extension of a tool therethrough into engagement with said fastener to remove the fastener from the locking member.

7. A joint comprising a box section, a pin section, a locking member mounted to the box section for actuation toward and away from the pin section, an actuating element connected threadedly to the box section and operable by rotation about an axis to actuate said locking member inwardly against the pin section to a position retaining the sections together, a rotary drive part for turning the actuating element about said axis and adapted to be turned about said axis by a tool, and holding means for releasably retaining said drive part against rotation; characterized by said drive part having an externally non-circular portion within a non-circular recess in said actuating element to turn the actuating element.

8. A joint as claimed in claim 7, in which said drive part is movable along said axis relative to said actuating element between a locking position in which it is retained by said holding means against rotation and a released position permitting rotation of the drive part to turn the actuating element.

9. A joint comprising a box section, a pin section, a locking member mounted to the box section for actuation toward and away from the pin section, an actuating element connected threadedly to the box section and operable by rotation about an axis to actuate the locking member inwardly against the pin section to a position retaining the sections

-13-

together, a fastener rotatably connecting said actuating element to said locking member, a drive part adapted to be turned about said axis by a tool and acting to turn the actuating element, characterized by said drive part being located laterally outwardly beyond said fastener and containing an opening through which a tool can extend inwardly beyond the drive part to engage and remove the fastener.

10. A joint as claimed in claim 9, including a spring yieldingly urging said drive part laterally outwardly relative to said fastener and through which the tool extends into engagement with the fastener.

00124468

1/3

FIG. 5

FIG. 1

FIG. 3

FIG. 4

00124468

FIG. 2

# EUROPEAN SEARCH REPORT

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 606 393 (C.F. HUNTSINGER et al.) * Column 4, lines 14-70; figure 2 * | 1,2,5-10 | E 21 B 17/046 F 16 L 37/12 |
| A | GB-A-1 147 862 (VENTURA TOOL) | | |
| A | GB-A-1 487 948 (HUNTING OILFIELD SERVICES) | | |
| A | US-A-4 114 928 (G.E. LOCHTE) | | |
| A | GB-A- 17 498 (R.C. HILTON) (A.D. 1911) | | **TECHNICAL FIELDS SEARCHED (Int. Cl. ³)** |
| A | GB-A-1 107 273 (VENTURA TOOL) | | E 21 B F 16 L |
| A | US-A-2 463 179 (W.C. IFTIGER) | | |

The present search report has been drawn up for all claims

| Place of search | Date of completion of the search | Examiner |
|---|---|---|
| THE HAGUE | 24-07-1984 | JAUNEZ X. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82